# EUROPEAN PATENT APPLICATION

(11) **EP 3 772 278 A1**
(43) Date of publication of application: **10.02.2021**
(21) Application number: 19213409.6
(22) Date of filing: 04.12.2019
(51) Int. Cl.: A01M 1/02, A01M 1/22

(54) **DEVICE AND PROCESS FOR OLIVE PICK PASTE CATCHING - HORIZONTAL TUBULAR MODEL**

(30) Priority: 06.08.2019 PT 2019115698; 06.08.2019 PT 2019115699; 06.08.2019 EP 19190286; 06.08.2019 EP 19190294
(71) Applicant: Universidade de Évora, 7000-803 Évora (PT)
(72) Inventor: Rei, Fernando, 7000-737 Évora (PT)
(74) Representative: Gata-Goncalves, Ligia

(57) **Abstract**

The present invention relates to the development of a device for capturing flying insects, in particular the olive fruit fly (*Bactrocera oleae*), a known olive grove pest.

This device or trap comprises a spiral (2) or linear skeleton and preferably an outer body (1) with small holes (3) through which volatile attractive compounds for adult insects placed within the trap are released. The attractive compound solution further comprises insecticidal compounds. By placing the trap horizontally along the olive tree crowns, the biotechnical control of the olive grove pests is thus promoted.

In this way, it is possible to promote the biotechnical control of the olive fruit fly by mass capturing thereof through the device of the invention, aiming at protecting the olive grove from the harmful action associated with the presence of the populations of this pest.

The present invention thus relates to the field of agronomy, phytosanitary protection and biotechnical control of olive grove pests.

## Description

### Technical domain of the invention

The present invention relates to the development of a device for capturing flying insects, in particular the olive fruit fly (*Bactrocera oleae*), for biological control of olive grove pests.

This device or trap comprises an outer cylindrical tubular body and a spiral or linear skeleton. In addition, the trap further comprises the use of a solution of volatile compounds which are attractive to adult insects, which solution may be dispersed within thereof by drippers externally coated with an impregnated absorbent material. More simply, the attractive solution can be introduced directly through one of the outer openings in the trap surface for the entry of insects and exit of volatile compounds. This solution also comprises a certain concentration of insecticidal substances.

By placing the trap horizontally along the olive tree crown or individually around each olive tree crown, the biotechnical control of the olive fruit fly pest is thus promoted.

The present invention thus relates to the field of agronomy, phytosanitary protection and biotechnical control of olive grove pests.

### Background of the Invention

Crops have several key insect pests, which can lead to high yield losses. Olive fruit fly is a key olive grove pest, possibly being the most damaging and it may reduce the production of olive oil by over 90%.

Due to its high impact, this pest is usually limited by the application of synthesis insecticides. However, this process of control has several current and future limitations as it not only impacts on useful biodiversity and the environment in general, but also contributes to the presence of chemical residues in production, which impacts on production quality and consumer health.

On the other hand, repeated and intensive application of a pesticide increases the likelihood of resistance phenomena, as is already the case with the only active substance acting on fly larvae (dimethoate) present inside the olive, reducing or eliminating the action of this substance in limiting the pest.

These problems underline the importance of developing new olive fruit fly control strategies, with no impact on auxiliary organisms and consumer health, and as alternatives to the use of synthesis pesticides.

Pest limitation, through the mass capture (or massive capture) methodology, is one of the alternatives to be seriously considered, making use of a large number of traps placed in the crop area to capture a large number of pest individuals, thus significantly reducing its population.

The current technology for mass capture of olive fruit fly focuses on the use of model OLIPE traps based on the use of 1.5L plastic bottles or similar with a food solution which passively emanates attractive food volatile compounds for adult (especially female) pest insects, the flies being drawn into the trap through small holes laterally around the trap and above the attractive solution level.

Article COUTINHO, J. et al. (2009) "Effectiveness of Olipe traps in mass capture of olive fruit fly (Bactrocera oleae) in olive groves in organic farming in Beira Interior Sul. In Simposio Nacional de Olivicultura, 5, Santarém, 24-26 Sep. - Actas Portuguesas de Horticultura. Lisbon: APH. Vol. 14, p. 101-107." describes this type of devices and process of capturing these insects, concluding that the use of Olipe traps contributes to the reduction of this pest in the olive grove.

Also the document by PATANITA, I. et al. "Auxiliaries and other means of controlling olive grove pests and diseases. Workshop "Good agro-environmental practices in olive oil row", Escola Superior Agraria de Beja, 2015) describes this problem and various solutions from conventional chemical control to biological control through the application of bioinsecticides and Olipe devices in the so-called biotechnical control.

In order to have an effect on reducing the fly population, it is recommended to place 1 OLIPE trap for each or every two trees. Given the current and future existence of a large number of intensive and super intensive olive groves (over 2,000 trees/ha) of large dimension, it is concluded that the OLIPE trap-based process entails such a logistical effort, which makes their use in olive groves of this type impossible. In addition, not only is the volatilization surface small, limited by the small diameter of the trap, but there is also a need to renew the attractive solution and clean the trap of flies captured in the meantime throughout the campaign. On the other hand, given the design, small size and side location of their holes, their ability to release and disseminate attractive volatiles throughout the crop area is small and ineffective for medium/long-distance insect attraction.

There is therefore a need to develop a sustainable, environmentally-friendly, and pest-limiting mass-capture system that maximizes the dissemination of attractive volatiles and the consequent attractiveness of pest insects into the trap, with both an autonomous operation and less logistical effort.

The present invention proposes a device and process which solves the above problems of the prior art through biotechnical control using attractive elements for olive fruit fly (*B*. *oleae*) which are disseminated in the relevant sites, in order to attract and capture it in large quantities, avoiding the reproduction thereof, substantially limiting damage to olive production.

Although the present disclosure is focused on olive fruit fly control, the device and process of the present invention, can also be applied in the control of other flying insect pests, including those active during the night, it being only necessary to adapt the attractive compound solutions being placed in the traps to the specificity of the species meant to be caught.

### General Description of the invention

The present invention relates to the development of a device or trap for mass capture of flying insects, in particular olive fruit fly (*B. oleae*).

The device or trap comprises a skeleton forming a spiral about 10 to 15 cm high and at least 6 meters long, or only by a longitudinal cable of the same length. The attractive solution for insects containing insecticidal compounds is dispensed along said device and may be disposed of by drippers on absorbent material or placed directly within the device which is in turn placed in the trees of the zones meant to be protected.

In a preferred embodiment, the spiral skeleton is covered with a thin and flexible material forming a cylindrical outer body about 10 to 15 cm high and at least 6 meters long.

Along the length of the outer body small holes are arranged, through which the volatile compounds of the attractive solution are released to adult insects. To this device it is also possible to add other compounds acting as pheromones for attracting adult insects.

These holes, preferably with varying diameters between 20 and 30 mm, also allow insects to enter the trap and their subsequent capture/death.

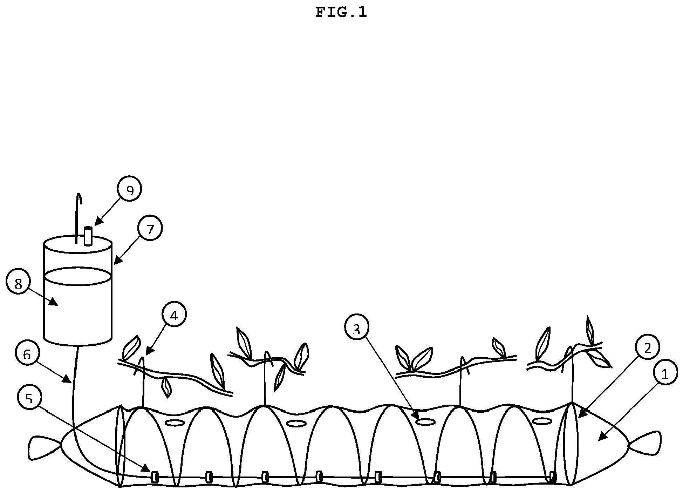

More specifically, the trap body is composed of a fiber tube or a thin and flexible plastic strip, the tubular shape thereof being conferred by the existence of a wire spiral inside thereof (Fig. 1, 2 and 3).

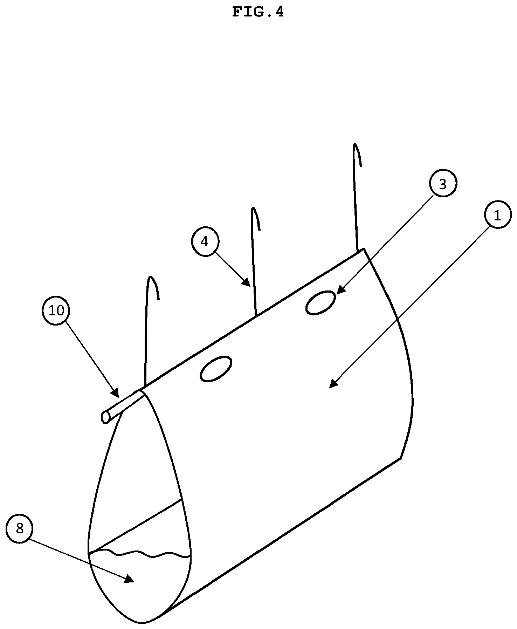

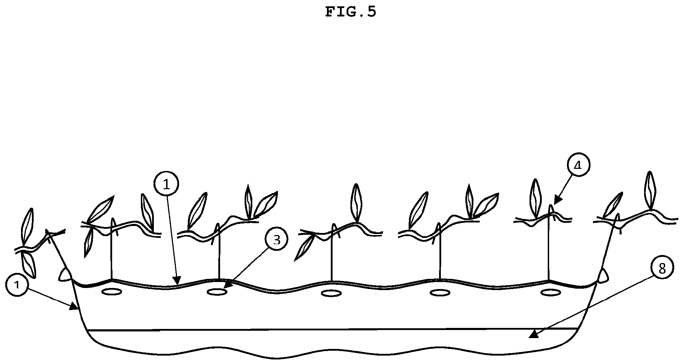

In its simplest design, the wire spiral can be replaced by a steel or nylon cable that runs and internally holds the entire length of the trap (fig. 4 and 5). In this embodiment, the attractive volatile compound solution is introduced directly into the trap through its outer holes. The tubular or subtubular shape is conferred by the volume of the attractive solution inside (Fig.5).

The tubular trap is placed horizontally in the olive grove, in the area of the tree crowns, and is fixed to the peripheral branches through small attachments between these branches and their spiral or linear cable, present inside the trap.

Thanks to the extreme flexibility of this trap it is possible to place it over several olive tree crowns (Fig 6), around the crown of a tree (Fig. 7) or possibly following the olive grove relief (Fig. 8), thus protecting several trees simultaneously.

The holes can be drilled before the trap is placed in the olive grove or at the moment of the application thereof on the trees, their number depending on the density and size of the crowns intended to be protected.

Preferably, the tubular trap is placed in the peripheral zone of the crowns, where usually a greater amount of olives is to be found, as recommended for the OLIPE reference traps. This reduces sun exposure of the traps, achieves a more gradual volatilization of the attractive food solution, as well as protects the trap from climatic phenomena such as precipitation, which could penetrate into the traps through the holes thereof.

As it is possible to open the holes at the moment of the trap placement on the trees, a better coincidence of these holes with the branches in the periphery of the crowns is ensured.

The attractive volatile solution with insecticidal substances can be gradually fed into the trap from a reservoir and a flow regulator, it being internally flowed through small adjustable flow drippers that soak rectangular pieces of absorbent material such as for example, a sponge cloth, lining the drippers.

In a more simplified design, the inside of the trap can be filled up to about 1/3 with the attractive solution directly through the holes in the trap body surface. Alternatively, it may be further sprayed internally by lining the inner walls of the trap. Commercially available insecticidal compound attractive formulations may be used for this purpose.

Replacing the attractive solution, when necessary, is carried out very simply and easily, either by the 3 to 6 liter container feeder/breather tube placed inside the crown or by further direct addition through the holes along the body of the trap.

Although a concentration of insecticidal compound is used to eliminate insects that are attracted to the volatile attractive solution, such use has no impact on the olive grove ecosystem as it is only confined within the tubular trap. For this result only insecticidal compounds with contact and/or ingestion pathways should be combined, and those with fumigation penetration pathways should be excluded. This prevents the toxic compound from escaping from the trap due to its volatilization.

This trap therefore fully fits in the objectives of Integrated Crop Protection, wherein the use of unauthorized substances for crop surface application is even made possible, combining biotechnical and chemical control without environmental impact. As insecticidal compounds are not applied to the surface of olives, the withholding periods indicated for these compounds need not be ensured.

Its design is intended to operate similarly to the OLIPE trap, but significantly reducing the number of traps per hectare of crop, about 2 to 3 times smaller, as well as their maintenance and management, given greater autonomy and ease of introduction and replacement of the volatile attractive solution. Consequently, the logistical requirements for the operation and effectiveness thereof are reduced, allowing their use even in super intensive olive groves.

Thus, the development of the tubular-horizontal trap for olive fruit fly mass capture integrates the mode of action of the OLIPE reference trap without the limitations of its operability, especially in high density olive groves.

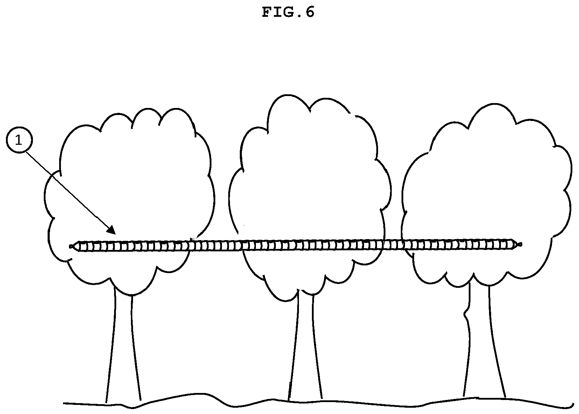

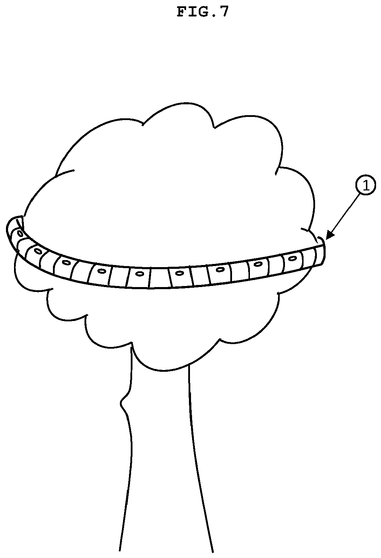

The construction, shape, arrangement and mode of operation thereof reduce the number of traps per hectare, allowing a single trap to protect several trees (fig. 6), in super-intensive olive groves, or around a tree, in conventional olive groves (Fig. 7).

The horizontal placement thereof in olive tree crowns maximizes the release of volatiles, as the exposure surface of the attractive solution occurs along the entire length of the trap, preferably 6 meters, not just being confined to the diameter of the trap, as with the OLIPE vertical trap. Higher volatilization of these substances shall be possible, as well as a greater attractiveness of insects to the inside thereof.

Being a trap made with low cost materials, it allows its use extensively and can be reused over several campaigns.

Due to its simple and light construction, its use is extremely flexible, adapting to olive groves of different typology, age, density or relief, requiring no special or additional skills from operators.

### Description of the figures

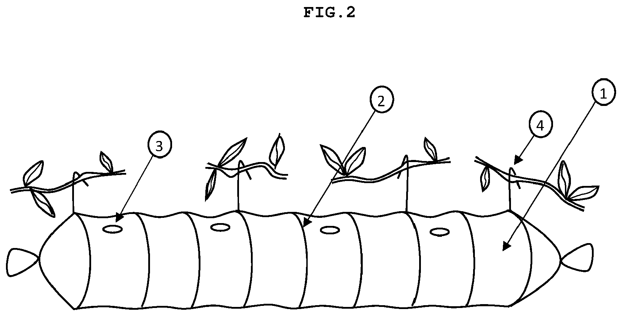

Fig.1 represents the embodiment of the device of the present invention, tubular-horizontal model, wherein:
   1 - Represents the pvc body of the trap
   2 - Represents the spiral skeleton of the trap
   3 - Represents a hole in the outer surface of the trap for attractive volatile exit and insect entry
   4 - Represents a steel wire device for fixing the trap to the outer branches of the tree crown.
   5 - Represents an adjustable dripper
   6 - Represents the attractive volatile solution and insecticidal compound feed tube to the drippers
   7 - Represents a container with liquid food attractive
   8 - Represents an attractive volatile solution and of insecticidal compounds
   9 - Represents a breathing/refueling tube
Fig. 2 represents another embodiment of the device of the present invention (exterior view), Tubular-Horizontal model.

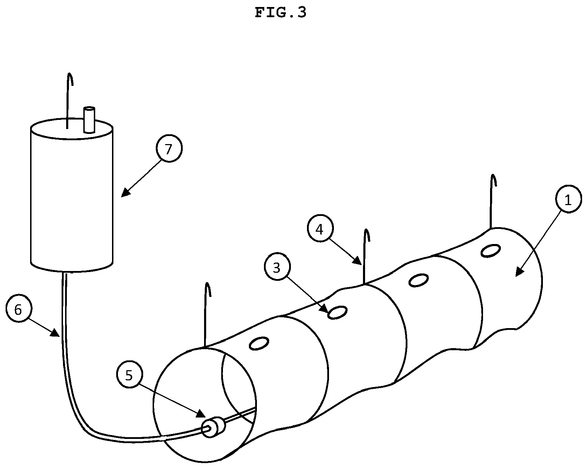

Fig. 3 represents another embodiment of the device of the present invention (perspective), Tubular-Horizontal model, wherein:
   10 - Represents a linear steel cable/wire to support and sustain the simplified design trap.
Fig. 4 represents another simplified embodiment of the device of the present invention (perspective), Tubular-Horizontal model.
Fig. 5 represents another simplified embodiment of the device of the present invention (perspective), Tubular-Horizontal model.
Fig. 6 represents the placement of the device of the present invention, Tubular-Horizontal model, in a set of trees.
Fig. 7 represents the placement of the device of the present invention, Tubular-Horizontal model, around a crown.

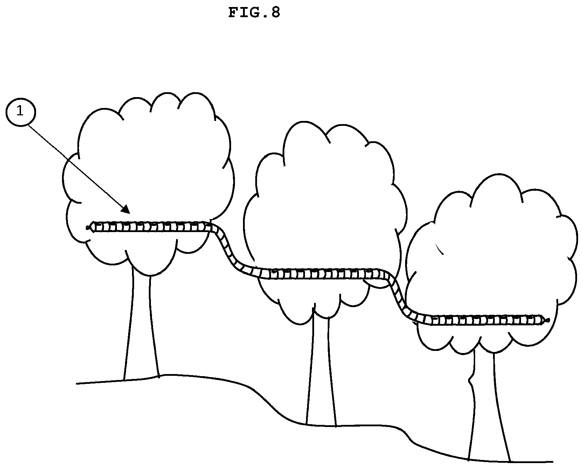

Fig. 8 represents the placement of the device of the present invention, Tubular-Horizontal model, in a set of trees, in a slope.

### 1. Characterization of the capturing device

The mass capture trap, tubular-horizontal model, is a tubular-shaped device or trap with an essentially cylindrical and compact body about 10 to 15 cm high and at least 6 meters long.

Throughout its length small holes are arranged through which volatile compounds, attractive to olive fruit fly adults, are released, allowing the insects to subsequently enter them with subsequent capture/death.

The trap body comprises a fiber tube or a thin and flexible plastic strip (1), the tubular shape thereof being conferred by the existence of a steel or copper spiral (2) inside thereof. In the simplest form, the tube only has a steel (10) or nylon cable/wire along its entire interior, with the tubular or sub-tubular shape conferred by the volume of the attractive solution (8) inside thereof.

Preferably, the tube (1) is made of flexible material, such as PVC, with a thickness ranging from 0.1 to 0.5 mm.

Preferably, the steel or copper wire used within the trap has a diameter ranging from 10 (2) to 22 mm (10) and may be stainless steel or plastic coated for better resistance to weather and environmental elements. In the simplified design of the device it can be a steel (10) or nylon cable/wire.

Attachment of the trap body to the peripheral branches of the crown can be accomplished by attachments composed of wire hooks (4) or with a nylon cable.

The attractive solution container (7), with a total volume of about 3 to 6 liters, ensures that the solution is autonomously metered within the trap over a period of 3 to 4 weeks to limit the occurrence egg laying of the pests in olives, this period varying according to weather conditions in the olive groves to be treated. The introduction of the volatile compound solution is metered into the trap body via drippers (5) or is placed directly into the trap body (1) through its holes (3).

### 2. Characterization of the attractive solution

The solution (8) placed in the container (7) comprises attractive, food or other volatile compounds for adult insects, to which a certain concentration of insecticidal compound is added. It is further possible to add other compounds attractive to adult insects which act as pheromones.

Preferably, the target insect to capture is the olive fruit fly (*B. oleae*).

Volatile compounds suitable for attracting these insects are, for example, food compounds, sex pheromones, etc., and combinations thereof currently available on the market. For the specific case of olive fruit fly are, for example, commercially available 4% ammonium dihydrogen phosphate solutions, Endomysil and pest-specific sex pheromone diffusers. The volatile food compounds have the main function of attracting flies, especially laying females, while those based on sexual pheromones contribute to attract males (in this species).

To this solution one or more toxic compounds for flying insects is added, in particular for the olive fruit fly (*B. oleae*)*.* Active substances associated with such insecticidal compounds within the scope of the present invention are, for example, dimethoate and deltamethrin, or others approved for the limitation of the olive fruit fly.

The insecticide concentrations in the attractive solution may preferably vary from 2 to 10% depending on their chemical and toxic characteristics.

In order to avoid the occurrence of resistance phenomena, insecticidal active substances with different modes of action should be alternated during replenishment and/or campaigning.

Drippers (5) are fed by a tube (6) from a container (7) located inside the crown, in a slightly higher position than the tubular trap.

The absorbent material, which may be a sponge cloth rectangle, or other commercially available absorbent material/structure, is placed around each dripper (5) within the trap and saturated with volatile attractive solution. The use of the absorbent material allows to control the operation of each dripper along the trap through its level of humidification.

### 3. Flying insect capture process

For trapping insects within the scope of the present invention, the tubular trap should be placed horizontally along or around the crowns of olive trees, thereby promoting biotechnical control of olive pests.

Preferably, the tubular-horizontal trap is placed at the periphery of the crown branches and is attached by steel wire (4) or nylon thread to the steel or nylon spiral (2) or linear cable (10) present inside the trap, to the branches of the olive trees.

In order to obtain the limiting effect on the pest population, it is recommended to place the traps at the beginning of the pest adults' activity before the egg laying period in the olives.

This period may vary depending on the weather conditions verified on the olive groves to be treated and therefore it is recommended to place the traps when the adult flight begins, predictably in early Spring, at the beginning of the pest activity and before the expected breeding season of these insects, which occurs roughly during the olive lignification (endocarp) phase and may remain on the field until the harvesting phase, that is, a period which may vary from 7 to 8 months in Mediterranean climates, where olive growing is more frequent, usually during Spring until Autumn.

Considering the size of the attractive solution containers (7), it is expected that they will need to be replaced after at least 3 to 4 weeks, depending on the ambient temperature and the degree of sun exposure of the trap.

### 4. Operation Process:

a) Placing the traps in the olive grove, preferably in early spring, at the beginning of the activity by adults of the pest and before fly breeding season, usually in mid-June;
b) Placing the traps in the peripheral branches of the south-facing side of the crown in a horizontal linear arrangement (Fig. 7) in each row of the olive grove for a total of 45 traps per hectare of crop;
c) Monthly observing the level of attractive solution (8) in the trap containers (7) or inside the trap body (1) in its simplified design and replacing thereof if necessary;
d) The liquid can be replaced by refilling the container (7) through its supply/breathing tube (9), without disassembly of any component of the device, or directly through its holes (3), in the simplified design of the device,
e) After olive harvesting, the olive tree traps are removed and emptied and washed inside to remove the captured flies.
f) storing the traps until the following year's campaign.

### Examples

### Example 1. Olive fruit fly capturing device with a tubular-horizontal trap

A tubular-horizontal mass capturing device/trap (Fig. 1, 2 and 3) has been assembled, comprising a cylindrical body with dimensions of about 6 m in length and 10 to 12 cm in diameter. The outer body of the trap (1) was formed by a thin and flexible PVC plastic film, a steel inner spiral (2), which gives the trap the cylindrical and tubular shape. The inner spiral of the trap was attached to the peripheral branches of the olive tree crown with steel wire (4) or nylon thread.

The attractive volatile substances are released out through small holes in the surface (3) thereof from an attractive food solution (8), in this example consisting of a 4% solution of ammonium dihydrogen added with insecticide active substance deltamethrin, approved for the limitation of the olive fruit fly.

The attractive food solution (8) was gradually dispensed from a 3 to 6 liter container (7), placed about 10 to 20 cm above the trap, into a dripper set (5) inside thereof and subsequently for the absorbent material, a sponge cloth of about 10 cm by 10 cm, arranged around each dripper, promoting solution volatility through circulation and contact of air with the sponge soaked with the attractive solution.

The traps were laid in early spring, at the beginning of insect flight, and were collected at the end of the campaign in October, and then cleaned and stored. The attractive volatile solution was returned to the container within 3 to 4 weeks.

### Example 2. Olive fruit fly capturing device with tubular-horizontal trap, simplified design

A tubular-horizontal mass capture device/trap has been assembled in its simplified design (Fig. 4 and 5), comprising a cylindrical body with dimensions of about 6 m in length and 10 to 12 cm in diameter. Internally a steel cable (10) has been placed, which allows to hold and attach the trap to the peripheral branches of the olive tree crown with a nylon thread. The outer body of the trap was formed by a thin and flexible PVC plastic film.

The substantially cylindrical shape (Fig. 4) was imparted after direct introduction of the volatile solution (8) through the holes in the surface of the trap (3), filling about 1/3 of the inner volume of the trap.

The attractive volatile substances were released out through small holes in the surface (3) thereof from an attractive food solution, in this example consisting of a 4% solution of ammonium dihydrogen added with insecticide active substance deltamethrin, approved for the limitation of the olive fruit fly.

The traps were laid in early spring, at the beginning of insect flight, and were collected at the end of the campaign in October, and then cleaned and stored. The attractive volatile solution was returned to the trap within 3 to 4 weeks.

This simplified design device can, as an alternative to capturing olive fruit fly, be used as a device for releasing volatile repellents for this insect, already identified in scientific work, promoting distancing of insects from olive tree crowns, in particular. during known periods of egg laying, beginning in the lignification phase of the lump. This application is part of the Push-pull technique, a biotechnical control methodology.

## Claims

1. A device for capturing flying insects **characterized by** comprising:
- a spiral (2) or linear (10) skeleton which gives the tubular shape (1) to the insect capturing device,
- a container for an attractive solution (7),
- an attractive solution (8) for adult insects comprising volatile food compounds and at least one insecticidal compound,
- a set of drippers (5) for dosing the attractive substance,
- a set of metal (4) or nylon attachments for placing traps on the outer branches of the olive tree crown.

2. A device according to claim 1 **characterized by** further comprising an outer body (1) having a substantially tubular shape, conferred by the spiral skeleton (2), about 10 to 15 cm high, more preferably about 12 cm high and 6 m long, and is made of a flexible plastic film, preferably from a 0.1 to 0.5 mm thick plastic tube or strip (1) containing holes with variable diameter from 20 to 30 mm.

3. A device according to claim 1 or 2, **characterized in that** the spiral skeleton (2) is made of flexible material, preferably a steel wire, more preferably plastic-coated stainless steel.

4. A device according to claim 1 or 2, **characterized in that** the spiral skeleton (2) is replaced by a longitudinal wire/cable (10) supporting and holding the trap body internally, the introduction of the attractive volatile solution being made directly up to about 1/3 of its inner volume, giving the body of the trap the cylindrical shape.

5. A device according to claim 1, **characterized in that** the volatile compounds of the attractive solution (8) comprise volatile food attracting compounds and/or pheromone-based compounds.

6. A device according to Claim 5, **characterized in that** the volatile compounds of the attractive solution (8) are suitable for attracting olive fruit fly (*Bactrocera oleae*)*.*

7. A device according to any one of claims 4 to 5, **characterized in that** the attractive solution (8) is dosed through drippers (5), into an absorbent material surrounding the drippers, or directly into the attractive solution (8) inside the insect capturing device.

8. A device according to Claim 1, **characterized in that** the container (7) for containing the attractive solution (8), added with an insecticidal compound, has a capacity of about 3 to 6L and is placed on an outer branch of the crown about 10 to 20 cm above the body of the trap (1).

9. A process for capturing flying insects and phytosanitary control of fruit tree pests caused by such insects in the areas to perform phytosanitary control, **characterized in that** one or more devices are arranged as described in any one of claims 1 to 8, horizontally at the periphery of the crown, along a set of fruit trees, or around the crown of each fruit tree to be protected, preferably attached by the trap device skeleton (2 and 10) to the outer branches of the olive trees by means of steel (4) or nylon attachments.

10. Process according to Claim 9, **characterized in that** the holes (3) in the outer body of the device can be drilled after placing the device in the olive trees.

11. Process according to any one of Claims 9 or 10, **characterized in that** the flying insect to be captured is the olive fruit fly (*B. oleae*).

12. Process according to any one of claims 9 to 11, **characterized in that** said devices are installed before the breeding season of the olive fruit fly (*B. oleae*), preferably in the period between the beginning of flight in adult insects to be captured and their breeding phase.

13. Process according to any one of Claims 9 to 12, **characterized in that** the device is removed from the olive grove immediately before olive harvesting season.

14. Process according to any one of Claims 9 to 13, **characterized in that** the attractive solution (8) is spread onto the absorbent material through a set of drippers (5) and a tube (6) from a container (7) placed within the crown or by direct addition thereof through the holes in the outer body (4) either from one end or along the device.

15. Process according to Claim 14, **characterized in that** the attractive solution (8) is replaced preferably every month.
